(19) Europäisches Patentamt
European Patent Office
Office européen des brevets

(11) **EP 3 460 420 B1**

(12) **EUROPÄISCHE PATENTSCHRIFT**

(45) Veröffentlichungstag und Bekanntmachung des Hinweises auf die Patenterteilung:
**12.03.2025 Patentblatt 2025/11**

(21) Anmeldenummer: **18195428.0**

(22) Anmeldetag: **19.09.2018**

(51) Internationale Patentklassifikation (IPC):
**G01F 23/14** (2006.01)   **G01F 22/02** (2006.01)
**F04D 15/00** (2006.01)   **F04D 15/02** (2006.01)
**G01L 19/06** (2006.01)

(52) Gemeinsame Patentklassifikation (CPC):
**F04D 15/0088; F04D 15/0218; G01F 22/02;
G01F 23/14; G01L 19/06**

(54) **VORRICHTUNG ZUR ERFASSUNG EINES MEDIENDRUCKS**

DEVICE FOR RECORDING THE PRESSURE OF A MEDIUM

DISPOSITIF DE DÉTECTION D'UNE PRESSION DE MILIEU

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **20.09.2017 DE 102017121778**

(43) Veröffentlichungstag der Anmeldung:
**27.03.2019 Patentblatt 2019/13**

(73) Patentinhaber: **Lutz Pumpen GmbH
97877 Wertheim (DE)**

(72) Erfinder:
• **Lutz, Karl-Heinz
97892 Kreuzwertheim (DE)**
• **Getze, Andrej
97892 Kreuzwertheim (DE)**

(74) Vertreter: **Christ, Niko
Geitz Patentanwälte PartG mbB
Obere Wässere 3-7
72764 Reutlingen (DE)**

(56) Entgegenhaltungen:
CN-U- 203 627 257          DE-A1- 10 060 007
DE-A1- 10 226 523          DE-A1- 102004 046 266
DE-A1- 3 639 455           US-A- 4 718 824
US-A1- 2011 181 426        US-A1- 2012 137 892
US-A1- 2015 211 526

**Beschreibung**

Die vorliegende Erfindung betrifft eine Vorrichtung zur Erfassung eines Mediendrucks innerhalb eines in einem Behälter aufgenommenen fließfähigen Mediums, umfassend eine Abschirmung und einen dieser zugeordneten oder anverbundenen Drucksensor, wobei die Abschirmung den Drucksensor von in dem Medium, etwa beim Befüllen oder Entleeren des Behälters, entstehenden Verwirbelungen wenigstens einseitig abschirmt, wobei der Drucksensor mit einer außenliegenden Datenverarbeitungseinheit zur Auswertung von Sensordaten kommuniziert und die Abschirmung mit einer Pumpenlanze einer Behälterpumpe im Bereich eines Pumpenfußes verbunden ist und mit dieser eine Messkammer ausbildet, in welcher der Drucksensor aufgenommen ist

Eine solche Vorrichtung ist bereits aus der US 2011/181426 A1 vorbekannt. Hierbei handelt es sich um Vorrichtung zur Erfassung des Drucks innerhalb eines Kraftstofftanks. Eine Messung des Füllstandes und die elektronische Übermittlung des Füllstandes erfolgt in diesem Fall über einen Sensor, der mit einem RFID-Chip elektronisch gekoppelt ist.

Des Weiteren wird auf die DE 100 60 007 A1 verwiesen. Hierbei handelt es sich um einen Drucksensor in einem Kraftstoffbehälter, welcher den Füllstand desselben erfassen soll und durch eine Abschirmung gegen Schwallbewegungen in dem fahrenden Fahrzeug geschützt werden soll.

Aus der DE 102 26 523 A1 ist es außerdem bekannt, in einer Pumpenlanze eine Druckleitung anzuordnen, die in einer Mindestfüllhöhe eine Öffnung in den Förderbehälter hinein besitzt. Aufgrund eines Druckabfalls bei einer Unterschreitung der Mindestfüllhöhe kann hier ein außenliegender Drucksensor auf die Füllhöhe zumindest einen gewissen Rückschluss ziehen.

Die DE 36 39 455 A1 betrifft eine vollelektronische Füllstandsmessung von Flüssigkeiten und Gasen, wofür flächige Druckaufnehmer eingesetzt werden.

Weiter ist in der EP 1 391 612 B1 beschrieben, mithilfe eines dort beschriebenen Pumpwerk zugeordneten Drucksensors die Höhe des Flüssigkeitsspiegels über einem Drucksensor zu ermitteln. Eine Feststellung des neuen Flüssigkeitspegels kann hierbei aber gemäß der Lehre der EP 1 391 612 B1 jeweils nur nach einem jeden Lauf der Pumpe, nicht währenddessen erfolgen.

Der Grund hierfür ist, dass der Drucksensor darauf beruht, einen statischen Druck zu messen. Um die Füllhöhe eines Behälters zu messen, versucht man in aller Regel, den Drucksensor an der tiefsten Stelle des Behälters anzuordnen, so dass er bezogen auf diese tiefste Stelle die Füllhöhe bestimmen kann. Diese tiefste Stelle eignet sich jedoch auch mit besonderem Vorteil dafür, die Pumpen zum vollständigen Entleeren des Behälters dort anzuordnen, beispielsweise im so genannten Pumpensumpf.

Werden nun eine oder mehrere Pumpenlanzen in den Behälter eingeführt und beginnen aus der unmittelbaren Umgebung des Drucksensors das Medium aus dem Behälter zu pumpen, an dem auch der Drucksensor angeordnet ist, so wird der Drucksensor nicht mehr unter den für ihn geeigneten Bedingungen, also bei statischem Druck, arbeiten können. Vielmehr werden seine Messergebnisse aufgrund der Bewegung des Mediums stark verfälscht. Dieser Effekt lässt sich mithilfe der Bernoulli-Gleichung erklären:

$$P_t = P_{dynamisch} + P_{statisch}$$

Ist die Pumpe ausgeschaltet, so ruht das Fluid und der dynamische Druckanteil ist Null. Es gilt in diesem Spezialfall:

$$P_t = P_{statisch}$$

Wird die Pumpe hingegen eingeschaltet, so wird das Fluid in dem Behälter in Bewegung versetzt. Da die entstehenden Verluste minimal sind, kann von einem konstanten Gesamtdruck $P_t$ ausgegangen werden, der statische Druck $P_{statisch}$ hingegen fällt beim Pumpvorgang. Wird nun wie beschrieben eine Füllstandsmessung durchgeführt, so wird aufgrund dieses Abfalls des statischen Drucks eine fehlerhafte Füllhöhe angezeigt.

Insbesondere in komplexeren Systemen, in denen die Füllstände in Behältern einer permanenten Kontrolle unterliegen sollen, kann dies etwa zu Fehlalarmen führen, wenn die Druckmessung ein nahezu vollständiges Entleeren eines Behälters mit einem z.B. produktionsrelevanten und kritischen Medium nahelegt.

Vor diesem Hintergrund liegt der vorliegenden Erfindung die Aufgabe zu Grunde, eine Vorrichtung zur Erfassung eines Mediendrucks innerhalb eines in einem Behälter aufgenommenen fließfähigen Mediums zu schaffen, der auch während des Pumpvorgangs korrekte Messwerte hinsichtlich der aus dem statischen Anteil des Mediendrucks resultierenden Füllhöhe zurückliefert.

Gelöst wird diese Aufgabe durch eine Vorrichtung gemäß den Merkmalen des Anspruchs 1. Weitere sinnvolle Ausgestaltungen einer solchen Vorrichtung können den Unteransprüchen entnommen werden.

Erfindungsgemäß ist vorgesehen, um den Drucksensor herum für eine möglichst weitgehend strömungsfreie, statische Umgebung zu sorgen, so dass ein statischer Druck gemessen werden kann. Hierzu wird der Drucksensor mit einer Abschirmung verbunden, wobei es sich im einfachsten Fall um ein Abschirmblech handeln kann. Die Abschirmung kann unterschiedliche Formen und Größen haben und aus unterschiedlichen Materialien hergestellt sein, wobei die Materialwahl auch weitgehend durch das Medium vorgegeben sein wird. Wesentlicher Aspekt ist hierbei, dass die Abschirmung groß genug gewählt wird, dass sie einen strömungsfreien Bereich innerhalb des Mediums definiert, in dem der Drucksensor aufgenommen ist.

Auf diese Weise wird der Drucksensor gegenüber ihn umgebenden Strömungen abgeschirmt und befindet sich trotz seiner eventuellen Nähe zum Pumpenfuß in zumindest weitestgehend statischem Medium. Je nachdem mit wie vielen wie hohen Wandabschnitten der Drucksensor umgeben wird, kann ein gewisser Einfluss auf den Anteil des statischen Drucks am Gesamtdruck genommen werden. Es können allerdings mit einigem Vorteil auch eine oder mehrere Durchtrittsöffnungen in der Abschirmung vorgesehen sein, so dass selbst bei einem mehr oder minder vollständigen, etwa becherförmigen Umgeben des Drucksensors durch die Abschirmung auch ein Absinken des Pegels unterhalb der Oberkante der Abschirmung in dieser stattfinden kann. Die Abschirmung ist oben offen und besitz im unteren Bereich eine Ausgleichsbohrung als Durchtrittsöffnung.

Die Abschirmung wird direkt an einer Pumpenlanze angeordnet und bildet gemeinsam mit deren Wandung eine Messkammer, in welcher der Drucksensor aufgenommen wird. Dies erfolgt, für eine möglichst unmittelbare Nähe zur tiefsten Behälterstelle, im Bereich des Pumpenfußes.

Die Sensordaten werden an eine Datenverarbeitungseinheit kommuniziert, die aus den Rohdaten des Drucksensors die Füllhöhe ermittelt und bedarfsweise weiterverarbeitet, also mit Behälterinformationen verrechnet, mit Grenzwerten vergleicht und Ergebnisse ihrer Berechnungen an Prozessrechner oder Interfaces weiterleitet.

Die Ausgestaltung der Messkammer kann unterschiedlichen Vorgaben unterliegen, mit einigem Vorteil kann der Drucksensor vollständig von der Messkammer umschlossen sein, so dass er sich vollständig im Einfluss des zumindest näherungsweise rein statischen Druckes innerhalb der Messkammer befindet. Ergänzend können aber auch Durchtrittsöffnungen in den Außenwandabschnitten vorgesehen sein, um die Messung innerhalb der Messkammer nicht ganz vom Behälter zu entkoppeln, sondern vielmehr ein Durchdringen der Messkammer mit dem Medium zu erlauben. Insbesondere oberhalb des Drucksensors sollte im Wesentlichen kein Gehäuseteil, sondern nur das Medium sein, um den zu messenden statischen Druck auf dem Drucksensor lasten zu lassen.

Der Drucksensor selbst kann etwa mittels einer Kabelverbindung mit der Datenverarbeitungseinheit verbunden sein. Eine solche Kabelverbindung kann auf dem einen Weg zur Spannungsversorgung des Drucksensors dienen, in Gegenrichtung aber auch die Sensordaten des Drucksensors an die Datenverarbeitungseinheit weiterleiten. In einer solchen Konfiguration kann bei dem Einführen der Pumpenlanze in den Behälter etwa zunächst der Drucksensor in die Messkammer eingesteckt und dann das Kabel entlang der Pumpenlanze zu der Datenverarbeitungseinheit geführt werden.

In einer weiteren Ausgestaltung der Pumpenlanze ist die Kabelverbindung direkt fest mit der Pumpenlanze verbunden und wird in einer längs der Pumpenlanze verlaufenden Aufnahme aus dem Behälter herausgeführt.

Für den Fall, dass das Pumpwerk mittels einer Überwurfmutter mit der Behälteröffnung verschraubt wird, kann durch eine solche Integration in den Mantel der Pumpenlanze auf eine separate Durchführung für die Kabelverbindung aus dem Behälter heraus verzichtet werden.

Alternativ oder ergänzend kann der Drucksensor aber auch einen Energiespeicher in Form einer Batterie oder eines wiederaufladbaren Akkumulators aufweisen. In diesem Fall wird der Drucksensor die Energie für seinen Betrieb direkt aus dem Energiespeicher beziehen und zudem über drahtlose Kommunikationsmittel, wie etwa ein drahtloses Funkmodul wie etwa Bluetooth oder eine vergleichbare Technik, verfügen. Messdaten werden in diesem Fall drahtlos an die Datenverarbeitungseinheit übermittelt, eine Kabelverbindung kann dann entfallen.

Diese Lösung kann dadurch weitergebildet werden, dass dem Drucksensor eine Induktionsspule zur Spannungsversorgung zugeordnet ist. In dieser wird eine Spannung zur Versorgung des Drucksensors, sowie zum Betrieb des drahtlosen Kommunikationsmoduls bzw. zum Aufladen des Energiespeichers induziert, indem dem Pumpenrotor ein Erregermagnet, insbesondere ein Permanentmagnet, zugeordnet wird. Durch die vom Pumpenmotor getriebene Rotation des Pumpenrotors wird auf diese Weise der Drucksensor von dem Pumpenrotor mitbetrieben, ohne eine separate Kabelführung zu erfordern.

Ferner kann der Drucksensor in einer solchen Konfiguration auf diese Weise leicht erkennen, ob die Pumpe aktiv ist. Dies ist dann essenziell, wenn der Drucksensor auch dazu dienen soll, unerwünschte Entnahmen aufgrund von Diebstahl oder Leckage zu detektieren. Ändert sich der Füllstand ohne eine Bewegung des Erregermagneten, so kann ein Alarmsignal ausgeben, welches von der Datenverarbeitungseinheit ausgewertet und interpretiert werden kann. Sofern mehrere Pumpen an demselben Behälter betrieben werden, kann hier ein nochmaliger Abgleich erfolgen, ob eine andere Pumpe in Betrieb ist. Ist auch dies nicht der Fall, wird die Datenverarbeitungseinheit Alarm geben.

Die Datenverarbeitungseinheit ihrerseits kann auf unterschiedliche Weise organisiert sein. Da im Rahmen der vorliegenden Erfindung davon ausgegangen wird, dass die Datenverarbeitungseinheit nur einem geschlossenen System zugeordnet ist, kann die Zuordnung zu dem Pumpwerk, zu dem Pumpenmotor oder zu dem Behälter erfolgen.

In einem ersten Fall, in dem die Datenverarbeitungseinheit mit dem Behälter verbunden ist, kann diese aufgrund einer einmaligen Zuordnung Behälterinformationen besitzen, etwa durch ein Einlesen eines RFID-Chips des Behälters oder durch Einspeichern in einen Festwertspeicher der Datenverarbeitungseinheit. Die Behälterinformationen können Daten wie das Volumen, die Füllhöhe, gegebenenfalls auch Restriktionen hinsichtlich Medien und weiteres umfassen. Da die Datenverarbeitungseinheit direkt am Behälter verbleibt, ändern sich diese nicht ohne Weiteres. Erhält nunmehr die Datenverarbeitungseinheit Sensordaten des Drucksensors, so können diese aufgrund der Behälterinformationen umgerechnet werden, etwa von einem Druck unter Berücksichtigung des Mediums in eine Füllhöhe und von einer Füllhöhe unter weiterer Berücksichtigung des Gesamtvolumens in eine Füllmenge. Auch lassen sich insbesondere die oben genannten Leckagen so besser beurteilen.

Ist hingegen die Datenverarbeitungseinheit dem Behälter, etwa aufgrund einer Verbindung mit dem Pumpwerk oder dem Pumpenmotor, nur zeitweilig zugeordnet, so ist es sinnvoll die Behälterinformationen einzulesen. Hierzu kann die Datenverarbeitungseinheit über geeignete Mittel zum Einlesen von Behälterinformationen aufweisen.

Konkret kann es sich bei diesen Mitteln zum Einlesen von Behälterinformationen um Mittel zur Nahfeldkommunikation handeln, mit denen ein in Reichweite befindlicher Informationsträger ausgelesen wird. Dabei kann es sich beispielsweise um einen RFID-Chip handeln, auf welchem die Behälterinformationen gespeichert sind, und welcher etwa bei dem Verbinden des Pumpwerks mit dem Behälter in Eingriff einer RFID-Leseeinheit gerät. Hierbei kommt es nicht darauf an, ob der RFID-Chip sämtliche erforderlichen Behälterinformationen direkt gespeichert vorhält, oder ob der RFID-Chip lediglich eine eindeutige Kennung trägt, anhand derer die Datenverarbeitungseinheit, gegebenenfalls unter Rückgriff auf eine Datenbank, die Behälterinformationen anderweitig beschaffen kann.

Schließlich ist es sinnvoll, wenn insbesondere im Fall eines Leckagealarms eine möglichst schnelle Identifikation und ein schnelles Auffinden des Behälters ermöglicht wird. Hierzu kann der Drucksensor bedarfsweise Mittel zur Geolokalisierung, etwa zur Triangulation, oder auch zum Empfang und Aussenden eines GPS-Signals, aufweisen.

Die vorstehend beschriebene Erfindung wird im Folgenden anhand eines Ausführungsbeispiels näher erläutert.

Es zeigen

Figur 1    einen Behälter, bei dem ein Pumpenmotor mit Pumpwerk eingesetzt sind, in einer Querschnittsdarstellung mit einem drahtlosen Drucksensor, sowie

Figur 2    den Behälter gemäß Figur 1 in einer Querschnittsdarstellung mit einem kabelgebundenen Drucksensor.

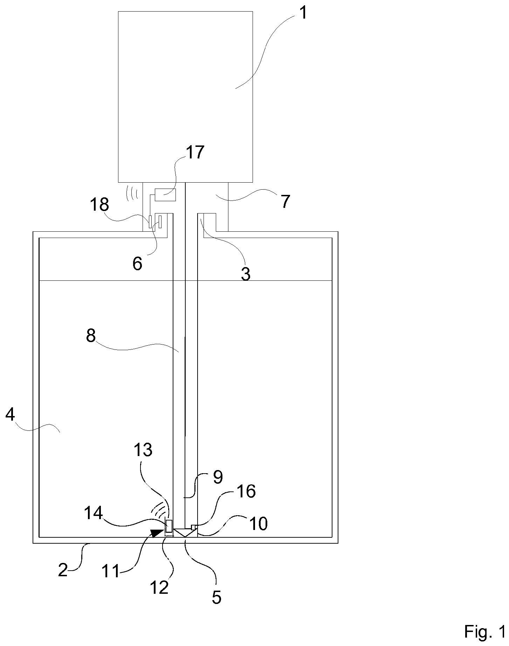

Figur 1 zeigt eine Querschnittsdarstellung eines Behälters 2 zur Aufnahme von fließfähigen Medien.

Der Behälter 2 weist an einer Oberseite mittig eine Behälteröffnung 3 auf, durch welche hindurch Medium 4 aus dem Behälter 2 entnommen oder in diesen eingebracht werden kann.

In den Behälter 2 ist ein Pumpwerk 7 mit einem darauf aufgesetzten Pumpenmotor 1 eingesetzt und in der Behälteröffnung 3 durch eine Überwurfmutter verschraubt. Das Pumpwerk 7 umfasst hierbei neben der Überwurfmutter eine Pumpenlanze 8, welche bis zu einem tiefsten Punkt des Behälters 2, welcher etwa als Pumpensumpf 5, ausgestaltet ist, in den Behälter 2 einragt. Durch einen Betrieb des Pumpenmotors 1 wird ein in der Pumpenlanze 8 liegender Pumpenrotor 9 betätigt und fördert das Medium 4 über einen hier nicht näher dargestellten Auslass aus dem Behälter 2.

Um die Füllhöhe in dem Behälter 2 feststellen zu können, ist der Pumpenlanze 8 im Bereich eines Pumpenfußes 10 ein Drucksensor 14 zugeordnet, welcher den statischen Druck im Bereich des Pumpensumpfes 5 misst, um daraus Rückschlüsse auf die Füllhöhe ziehen zu können. Der Drucksensor erfasst hierzu den statischen Druck um den Pumpenfuß herum und überträgt seine Sensordaten drahtlos über eine Bluetooth-Verbindung an eine Datenverarbeitungseinheit 17, welche an dem Pumpwerk 7 angeordnet ist. Beide Kommunikationspartner weisen hierzu über ein Kommunikationsinterface auf, über welches eine drahtlose Kommunikation möglich ist. Die Spannungsversorgung des Drucksensors 14 erfolgt über eine hier nicht näher beschriebene Batterie, die über eine nicht näher dargestellte Induktionsspule aufgeladen wird. Als Erreger dient hierbei ein Erregermagnet 16, welcher dem Pumpenrotor 9 zugeordnet ist und aufgrund seiner Bewegung ein sich ständig änderndes Magnetfeld erzeugt.

Da ein statischer Druck um den Drucksensor 14 herum nur bei stillstehendem Pumpenrotor 9 vorliegt, ist der Drucksensor 14 in einer Messkammer 11 aufgenommen, welche als Abschirmung das Medium 4 vom Drucksensor 14 trennt. Zwar weist die Messkammer 11 eine obere Offenseite 13 und an ihrer Unterseite eine Durchtrittsöffnung 12 auf, so dass der Drucksensor 14 nicht nur einen lokalen Kammerdruck innerhalb der Messkammer 11 erfasst, jedoch kann der Anteil des dynamischen Drucks, welcher den Anteil des statischen Drucks senkt, dadurch möglichst geringgehalten und der Drucksensor 14 den Wirkungen des dynamischen Drucks entzogen werden. Hierdurch ist eine verlässliche Messung auch bei laufendem Pumpenrotor 9 möglich.

Da die Auswertung der Sensordaten des Drucksensors 14 weitere Kenntnisse über den Behälter 2 benötigt, müssen diese für eine geeignete Auswertung der Datenverarbeitungseinheit 17 zur Verfügung stehen. Diese weist hierfür eine RFID-Leseeinheit 18 auf, welche mit einem RFID-Chip 6 des Behälters 2 zusammenwirkt und welche beim Einführen des Pumpwerks 7 in den Behälter 2 ausgelesen werden kann. Der RFID-Chip 6 speichert eine eindeutige Kennung des Behälters 2 oder seiner Bauart, so dass die Datenverarbeitungseinheit 17 sämtliche benötigten Behälterinformationen zu dem Behälter 2 beschaffen kann.

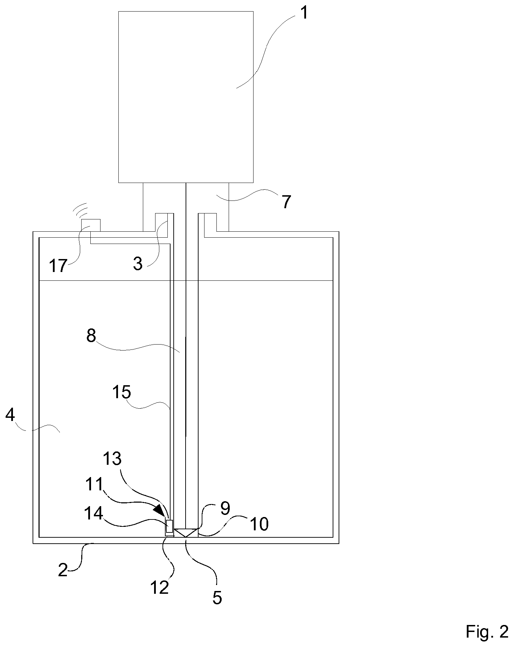

Figur 2 zeigt eine Variante der Figur 1, bei der zum einen die Datenverarbeitungseinheit 17 dem Behälter 2 direkt zugeordnet ist, zum anderen die Datenverarbeitungseinheit 17 mit dem Drucksensor 14 über eine Kabelverbindung 15 kommuniziert. Dadurch, dass die Datenverarbeitungseinheit 17 mit dem Behälter fest verbunden ist, sind die Behälterinformationen des Behälters 2 bereits fest in der Datenverarbeitungseinheit 17 gespeichert. Ein Einlesen der Behälterdaten, etwa beim Einführen des Pumpwerks 7 in die Behälteröffnung 3, kann dadurch entfallen.

Die Kabelverbindung 15 zum Drucksensor 14 kann hingegen beim Einführen des Pumpwerks 7 hergestellt werden, so dass der Drucksensor 14 über die Kabelverbindung mit der Datenverarbeitungseinheit 17 kommunizieren kann und von dort spannungsversorgt wird. Bedarfsweise lässt sich die Kabelverbindung 15 direkt in den Mantel der Pumpenlanze 8 integrieren, um einen definierten Verlauf der Kabelverbindung 15 zu erreichen.

Vorstehend beschrieben ist somit ein Pumpwerk, welches derart mit einem Drucksensor ausgestattet ist, dass eine Messung des statischen Drucks auch während des Pumpbetriebs erfolgen kann. Dies wird dadurch erreicht, dass der Drucksensor in einer Messkammer aufgenommen und dort von Verwirbelungen des Mediums abgeschirmt ist.

**BEZUGSZEICHENLISTE**

| 1 | Pumpenmotor |
| 2 | Behälter |
| 3 | Behälteröffnung |
| 4 | Medium |
| 5 | Pumpensumpf |
| 6 | RFID-Chip |
| 7 | Pumpwerk |
| 8 | Pumpenlanze |
| 9 | rotierende Welle mit Laufrad |
| 10 | Pumpenfuß |
| 11 | Messkammer |
| 12 | Durchtrittsöffnung |
| 13 | Offenseite |
| 14 | Drucksensor |
| 15 | Kabelverbindung |
| 16 | Erregermagnet |
| 17 | Datenverarbeitungseinheit |
| 18 | RFID-Leseeinheit |

**Patentansprüche**

1. Vorrichtung zur Erfassung eines Mediendrucks innerhalb eines in einem Behälter aufgenommenen fließfähigen Mediums (4), umfassend eine Abschirmung und einen dieser zugeordneten oder anverbundenen Drucksensor (14), wobei die Abschirmung den Drucksensor (14) von in dem Medium (4), etwa beim Befüllen oder Entleeren des Behälters (2), entstehenden Verwirbelungen wenigstens einseitig abschirmt,

   wobei der Drucksensor (14) mit einer außenliegenden Datenverarbeitungseinheit (17) zur Auswertung von Sensordaten kommuniziert und die Abschirmung derart ausgeführt ist, dass sie mit einer Pumpenlanze (8) einer Behälterpumpe im Bereich eines Pumpenfußes (10) verbindbar ist und im verbundenen Zustand zusammen mit dieser eine Messkammer (11) ausbildet, in welcher der Drucksensor (14) aufgenommen ist,
   wobei die Abschirmung zum einen groß genug ist, um einen strömungsfreien Bereich innerhalb des Mediums zu definieren und zum anderen im verbundenen Zustand oben offen ist und im unteren Bereich eine Ausgleichsbohrung als Durchtrittsöffnung besitzt.

2. Vorrichtung gemäß Anspruch 1, **dadurch gekennzeichnet, dass** die Abschirmung einen Messkorb oder eine Messkammer (11) ausbildet, welche den Drucksensor (14) mehrseitig umschließt.

3. Vorrichtung gemäß einem der vorhergehenden Ansprüche, **dadurch gekennzeichnet, dass** der Drucksensor (14) vermittels einer Kabelverbindung (15) mit der Datenverarbeitungseinheit (17) datenverbunden und/oder durch diese spannungsversorgt ist.

4. Vorrichtung gemäß Anspruch 3, **dadurch gekennzeichnet, dass** die Kabelverbindung (15) derart ausgeführt ist, dass sie in einen Mantel der Pumpenlanze (8) integrierbar ist.

5. Vorrichtung gemäß einem der Ansprüche 1 und 2, **dadurch gekennzeichnet, dass** der Drucksensor (14) einen Energiespeicher aufweist und mit der Datenverarbeitungseinheit (17) über eine drahtlose Kommunikationsverbindung datenverbunden ist.

6. Vorrichtung gemäß einem der vorhergehenden Ansprüche, **dadurch gekennzeichnet, dass** der Drucksensor (14) eine Induktionsspule zur Spannungsversorgung aufweist, in welcher mittels eines mit einer in der Pumpenlanze (8) rotierenden Welle (9) mit Laufrad verbundenen Erregermagneten (16) eine Versorgungsspannung und/oder Ladespannung für den Energiespeicher des Drucksensors (14) induziert wird.

7. Vorrichtung gemäß Anspruch 6, **dadurch gekenn-**

zeichnet, dass der Drucksensor (14) im Falle einer Erregung durch den Erregermagneten (16) einen Betrieb der rotierenden Welle (9) an die Datenverarbeitungseinheit (17) meldet.

8. Vorrichtung gemäß einem der vorhergehenden Ansprüche, weiter umfassend die Datenverarbeitungseinheit (17), **dadurch gekennzeichnet, dass** die Datenverarbeitungseinheit (17) derart ausgeführt ist, dass sie mit der Pumpenlanze (8) oder mit einem außenliegenden Pumpenmotor (1) verbindbar ist und Mittel zum Einlesen von Behälterinformationen zur Auswertung der Sensordaten des Drucksensors (14) aufweist.

9. Vorrichtung gemäß Anspruch 8, **dadurch gekennzeichnet, dass** es sich bei den Mitteln zum Einlesen von Behälterinformationen um eine Nahfeldkommunikationseinheit handelt, welche vorzugsweise im Bereich der Behälteröffnung angeordnete Informationsträger des Behälters (2) ausliest.

10. Vorrichtung gemäß Anspruch 9, **dadurch gekennzeichnet, dass** als Nahfeldkommunikationseinheit eine RFID-Leseeinheit (18) verwendet wird, welche einen RFID-Chip (6) ausliest, auf welchem Behälterinformationen gespeichert sind.

11. Vorrichtung gemäß einem der vorhergehenden Ansprüche, weiter umfassend die Datenverarbeitungseinheit (17) **dadurch gekennzeichnet, dass** die Datenverarbeitungseinheit (17) derart ausgeführt ist, dass sie mit dem Behälter (2) verbindbar ist und Behälterinformationen zur Auswertung der Sensordaten des Drucksensors (14) besitzt.

12. Vorrichtung gemäß einem der vorhergehenden Ansprüche, weiter umfassend die Datenverarbeitungseinheit (17), **dadurch gekennzeichnet, dass** dem Drucksensor (14) und/oder der Datenverarbeitungseinheit (17) Mittel zur Geolokalisierung zugeordnet sind.

**Claims**

1. A device for sensing the pressure of a medium within a fluid medium (4) received in a container, comprising a screen and a pressure sensor (14) associated with or joined thereto, wherein the screen shields the pressure sensor (14) at least on one side from swirls formed in the medium (4), for example during filling or emptying of the container (2),

   wherein the pressure sensor (14) communicates with an external data-processing unit (17) for evaluation of sensor data, and the screen is designed to be connectible to a pump lance (8) of a container pump in the region of a pump foot (10) and, in the connected state, forms together with said pump lance a measuring chamber (11) in which the pressure sensor (14) is received,
   wherein the screen is large enough to define a flow-free region within the medium and, in the connected state, is open at the top and has a compensating bore as a through-opening in the lower region.

2. The device according to claim 1, **characterized in that** the screen forms a measuring basket or a measuring chamber (11) which surrounds the pressure sensor (14) on multiple sides.

3. The device according to any one of the preceding claims,
   **characterized in that** the pressure sensor (14) is data-connected by means of a cable connection (15) to the data-processing unit (17) and/or is supplied with voltage thereby.

4. The device according to claim 3, **characterized in that** the cable connection (15) is designed such that it can be integrated into a jacket of the pump lance (8).

5. The device according to any one of claims 1 and 2, **characterized in that** the pressure sensor (14) has an energy store and is data-connected to the data-processing unit (17) via a wireless communication link.

6. The device according to any one of the preceding claims,
   **characterized in that** the pressure sensor (14) has an induction coil for voltage supply, in which a supply voltage and/or charging voltage for the energy store of the pressure sensor (14) is induced by an exciter magnet (16) joined to a rotor shaft (9) rotating in the pump lance (8).

7. The device according to claim 6, **characterized in that** the pressure sensor (14) signals to the data-processing unit (17) that the rotor shaft (9) is operating in the event of excitation by the exciter magnet (16).

8. The device according to any one of the preceding claims, further comprising the data-processing unit (17), **characterized in that** the data-processing unit (17) is designed such that it can be joined to the pump lance (8) or to an external pump motor (1) and has means for reading container information for evaluation of the sensor data of the pressure sensor (14).

9. The device according to claim 8, **characterized in**

**that** the means for reading container information is a near-field communication unit which reads out information from information carriers of the container (2) which are preferably arranged in the region of the container opening.

10. The device according to claim 9, **characterized in that** an RFID reader unit (18) which reads from an RFID chip (6) on which container information is stored is used as the near-field communication unit.

11. The device according to any one of the preceding claims, further comprising the data-processing unit (17), **characterized in that** the data-processing unit (17) is designed such that it can be joined to the container (2) and possesses container information for evaluation of the sensor data of the pressure sensor (14).

12. The device according to any one of the preceding claims, further comprising the data-processing unit (17), **characterized in that** the pressure sensor (14) and/or the data-processing unit (17) are associated with means for geolocation.

**Revendications**

1. Dispositif pour la détection d'une pression de milieu à l'intérieur d'un milieu (4) fluide reçu dans un réservoir, comprenant une protection et un capteur de pression (14) associé à celle-ci ou relié à celle-ci, dans lequel la protection protège au moins d'un côté le capteur de pression (14) des tourbillons se produisant dans le milieu (4), par exemple lors du remplissage ou de la vidange du réservoir (2),

   dans lequel le capteur de pression (14) communique avec une unité de traitement de données (17) située à l'extérieur pour l'évaluation de données de capteur et la protection est réalisée de telle sorte qu'elle peut être reliée à une lance de pompe (8) d'une pompe de réservoir dans la zone d'un pied de pompe (10) et, à l'état relié, forme conjointement avec celle-ci une chambre de mesure (11) dans laquelle est reçu le capteur de pression (14),
   dans lequel la protection est d'une part suffisamment grande pour définir une zone sans écoulement à l'intérieur du milieu et est d'autre part ouverte vers le haut à l'état relié et possède dans la zone inférieure un trou de compensation comme ouverture de passage.

2. Dispositif selon la revendication 1, **caractérisé en ce que** la protection forme un panier de mesure ou une chambre de mesure (11) qui entoure le capteur de pression (14) sur plusieurs côtés.

3. Dispositif selon l'une des revendications précédentes, **caractérisé en ce que** le capteur de pression (14) est connecté par données à l'unité de traitement de données (17) par l'intermédiaire d'une connexion par câble (15) et/ou est alimenté en tension au moyen de ladite connexion.

4. Dispositif selon la revendication 3, **caractérisé en ce que** la connexion par câble (15) est réalisée de telle sorte qu'elle peut être intégrée dans une gaine de la lance de pompe (8).

5. Dispositif selon l'une des revendications 1 et 2, **caractérisé en ce que** le capteur de pression (14) présente un accumulateur d'énergie et est connecté par données à l'unité de traitement de données (17) par l'intermédiaire d'une connexion de communication sans fil.

6. Dispositif selon l'une des revendications précédentes, **caractérisé en ce que** le capteur de pression (14) présente une bobine d'induction pour l'alimentation en tension, dans laquelle une tension d'alimentation et/ou une tension de charge pour l'accumulateur d'énergie du capteur de pression (14) sont induites au moyen d'un aimant d'excitation (16) relié à un arbre (9) tournant dans la lance de pompe (8) et comportant une roue.

7. Dispositif selon la revendication 6, **caractérisé en ce que** le capteur de pression (14) signale à l'unité de traitement de données (17) un fonctionnement de l'arbre (9) qui tourne en cas d'excitation par l'aimant d'excitation (16).

8. Dispositif selon l'une des revendications précédentes, comprenant en outre l'unité de traitement de données (17), **caractérisé en ce que** l'unité de traitement de données (17) est réalisée de telle sorte qu'elle peut être connectée à la lance de pompe (8) ou à un moteur de pompe (1) situé à l'extérieur et présente des moyens pour la lecture d'informations de réservoir pour l'évaluation des données de capteur du capteur de pression (14).

9. Dispositif selon la revendication 8, **caractérisé en ce que** les moyens pour la lecture d'informations de réservoir sont une unité de communication en champ proche qui lit des supports d'informations du réservoir (2) disposés de préférence dans la zone de l'ouverture de réservoir.

10. Dispositif selon la revendication 9, **caractérisé en ce qu'**une unité de lecture RFID (18) est utilisée comme unité de communication en champ proche, laquelle lit une puce RFID (6) sur laquelle sont stockées des informations de réservoir.

11. Dispositif selon l'une des revendications précédentes, comprenant en outre l'unité de traitement de données (17) **caractérisé en ce que** l'unité de traitement de données (17) est réalisée de telle sorte qu'elle peut être connectée au réservoir (2) et possède des informations de réservoir pour l'évaluation des données de capteur du capteur de pression (14).

12. Dispositif selon l'une des revendications précédentes, comprenant en outre l'unité de traitement de données (17), **caractérisé en ce que** des moyens pour la géolocalisation sont associés au capteur de pression (14) et/ou à l'unité de traitement de données (17).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2011181426 A1
- DE 10060007 A1
- DE 10226523 A1
- DE 3639455 A1
- EP 1391612 B1